# EUROPÄISCHE PATENTSCHRIFT

(11) **EP 3 837 140 B1**
(45) Veröffentlichungstag und Bekanntmachung des Hinweises auf die Patenterteilung: **07.09.2022**
(21) Anmeldenummer: 19750099.4
(22) Anmeldetag: 31.07.2019
(51) Int. Cl.: B60R 1/076, B60R 1/06, B60R 11/04

(54) **HALTEEINRICHTUNG FÜR EIN AUSSENANBAUTEIL EINES KRAFTFAHRZEUGS**
RETAINING DEVICE FOR AN EXTERIOR ADD-ON PART OF A MOTOR VEHICLE
DISPOSITIF DE MAINTIEN D'UNE PIÈCE DE FIXATION EXTÉRIEURE D'UN VÉHICULE AUTOMOBILE

(30) Priorität: 16.08.2018 DE 102018213818
(43) Veröffentlichungstag der Anmeldung: 23.06.2021
(73) Patentinhaber: Continental Automotive Technologies GmbH, 30165 Hannover (DE)
(72) Erfinder: SCHMALRIEDE, Tobias, 65824 Schwalbach/ Ts (DE); LINK, Johannes, 65824 Schwalbach/ Ts (DE); KRUMM, Eduard, 65824 Schwalbach/ Ts (DE); GRÜNIG, Thomas, 65824 Schwalbach/ Ts (DE)
(74) Vertreter: Continental Corporation
(86) Internationale Anmeldenummer: PCT/EP2019/070647
(87) Internationale Veröffentlichungsnummer: WO 2020/035317

(56) Entgegenhaltungen:
- EP-A1- 3 254 902
- DE-A1-102010 001 268
- DE-B3-102012 015 395
- GB-A- 1 278 865
- US-A- 4 789 232
- US-A- 5 375 014

## Beschreibung

Halteeinrichtung für ein Außenanbauteil eines Kraftfahrzeugs Die Erfindung betrifft eine Halteeinrichtung für ein Außenanbauteil eines Kraftfahrzeugs gemäß dem Oberbegriff des unabhängigen Patentanspruchs.

Aus der DE 10 2012 015 395 B3 ist ein Kameraarm für eine Spiegelersatzsystem-Kamera eines Kraftfahrzeugs mit einem ersten Gehäuseelement und einem zweiten Gehäuseelement bekannt. Das erste Gehäuseelement nimmt eine Bildaufnahmeeinheit der Spiegelersatzsystem-Kamera auf und das zweite Gehäuseelement ist dazu eingerichtet, lagefest mit der Karosserie des Kraftfahrzeugs verbunden zu werden. Das erste Gehäuseelement ist bezüglich des zweiten Gehäuseelements in einer festen, nicht abgeklappten Betriebsposition feststellbar. Des Weiteren ist zwischen dem ersten Gehäuseelement und dem zweiten Gehäuseelement ein Schwenkmechanismus vorgesehen, sodass das erste Gehäuseelement relativ zum zweiten Gehäuseelement um eine Schwenkachse schwenkbar und beim Einwirken einer größeren Kraft als der normalerweise im Betrieb auftretenden Kraft weg- oder einklappbar ist. Der Schwenkmechanismus enthält einen Federmechanismus, der das erste Gehäuseelement relativ zum zweiten Gehäuseelement in einer nicht abgeklappten Betriebsposition vorbelastet. Diese Vorbelastung bietet eine Rückstellfunktion, sodass nach einer erfolgten Kollision mit einem Einschwenken des ersten Gehäuseelements relativ zu dem zweiten Gehäuseelement das erste Gehäuseelement wieder in seine Betriebsposition zurückkehrt, ohne dass ein Fahrer manuell nachjustieren muss.

EP 3 254 902 A1 offenbart eine Halteeinrichtung gemäß dem Oberbegriff des Patentanspruchs 1 und zeigt eine Überwachungsvorrichtung für das

Umfeld eines Fahrzeugs wobei ein erstes, lagefest mit dem Fahrzeug verbindbares Tragelement vorgesehen ist. Ein erster Schwenkmechanismus verbindet das erste Tragelement mit einem zweiten Tragelement. Über einen zweiten Schwenkmechanismus ist das zweite Tragelement mit einem dritten Tragelement verbunden. In dem dritten Tragelement ist eine Sensoreinheit, die einen räumlichen Erfassungsbereich aufweist, angeordnet.

Aufgabe der vorliegenden Erfindung ist es, eine Halteeinrichtung für ein Außenanbauteil eines Kraftfahrzeugs zu schaffen, mittels welcher das Außenanbauteil besonders einfach relativ zu einer Außenoberfläche des Kraftfahrzeugs positionierbar und gleichzeitig besonders gut vor einer Kollisionsbeschädigung geschützt ist.

Diese Aufgabe wird durch eine Halteeinrichtung für ein Außenanbauteil eines Kraftfahrzeugs mit den Merkmalen des unabhängigen Patentanspruchs gelöst. Vorteilhafte Ausführungen der Erfindung sind Gegenstand der abhängigen Patentansprüche und der Beschreibung.

Die Erfindung betrifft eine Halteeinrichtung für ein Außenanbauteil eines Kraftfahrzeugs mit einem Grundteil zur außenseitigen Anordnung an einem Kraftfahrzeug. An dem Grundteil ist ein Verbindungselement mittels einer ersten Schwenkvorrichtung gelagert, mittels welcher das Verbindungselement relativ zum Grundteil um eine erste Schwenkachse zwischen einer Arbeitsstellung und wenigstens einer Schutzstellung verschwenkbar ist. Die erste Schwenkvorrichtung weist eine erste Federeinrichtung auf, mittels deren Federkraft das Verbindungselement von der wenigstens einen Schutzstellung in die Arbeitsstellung rückstellbar ist. Mit anderen Worten ist das Grundteil dazu eingerichtet, an einer Außenseite des Kraftfahrzeugs angeordnet zu werden. Das Verbindungselement, welches insbesondere länglich ausgebildet ist, ist an seinem einen Ende über die erste Schwenkvorrichtung relativ zu dem Grundteil verschwenkbar an dem Grundteil befestigt. Die Arbeitsstellung beschreibt eine Ausrichtung der Halteeinrichtung relativ zu dem Grundteil. In der Arbeitsstellung werden mittels des Außenanbauteils beispielsweise Informationen über eine Umgebung des Kraftfahrzeugs ermittelt, um diese Informationen für ein Steuern des Kraftfahrzeugs bereitzustellen. Die mittels des Außenanbauteils ermittelten Informationen können im Innenraum des Kraftfahrzeugs ausgegeben werden und/oder an eine elektronische Recheneinrichtung zum automatischen Steuern des Kraftfahrzeugs übermittelt werden. In der wenigstens einen Schutzstellung der Halteeinrichtung ist insbesondere das Verbindungselement derart angeordnet, dass das Außenanbauteil besonders gut vor einer Beschädigung infolge einer Kollision geschützt werden kann. Um ein besonders vorteilhaftes Positionieren des Außenanbauteils in der Arbeitsstellung der Halteeinrichtung zu ermöglichen und gleichzeitig einen besonders vorteilhaften Kollisionsschutz für die Halteeinrichtung bereitzustellen, ist erfindungsgemäß ein Halteelement zum Aufnehmen des Außenanbauteils vorgesehen. Das Halteelement ist um eine von der ersten Schwenkachse beabstandete und zu dieser parallele zweite Schwenkachse zwischen der Arbeitsstellung und der wenigstens einen Schutzstellung schwenkbar an dem Verbindungselement über eine zweite Schwenkvorrichtung mit einer zweiten Federeinrichtung gelagert. Mittels der zweiten Federeinrichtung ist das Halteelement von der wenigstens einen Schutzstellung in die Arbeitsstellung rückstellbar. Beispielsweise ist das Halteelement länglich ausgebildet und an seinem ersten Ende mit dem Verbindungselement über die zweite Schwenkvorrichtung gehalten. An seinem anderen Ende beziehungsweise dem zweiten Ende des Halteelements weist das Halteelement eine Aufnahme für das Außenanbauteil auf, mittels welcher das Außenanbauteil aufnehmbar ist. Somit ist das Außenanbauteil über das Halteelement sowie über das Verbindungselement an dem Grundteil gehalten. Mittels der ersten Schwenkvorrichtung ist das Verbindungselement relativ zum Grundteil verschwenkbar während mittels der zweiten Schwenkeinrichtung das Halteelement relativ zum Verbindungselement verschwenkbar ist. Die erste Federeinrichtung sowie die zweite Federeinrichtung dienen jeweils einem Rückstellen des Verbindungselements beziehungsweise des Halteelements von der wenigstens einen Schutzstellung in die Arbeitsstellung. Die Arbeitsstellung kann insbesondere durch eine Federkraft der jeweiligen Federeinrichtungen vorgegeben sein. In der Arbeitsstellung steht insbesondere das Halteelement entlang seiner Längserstreckungsrichtung senkrecht von dem Grundteil ab, um einen größtmöglichen Abstand in der Arbeitsstellung zwischen dem Grundteil und dem Außenanbauteil des Kraftfahrzeugs einzustellen. Hierdurch kann ein besonders großer Erfassungsbereich für das Außenanbauteil zum Erfassen der Informationen über die Umgebung des Kraftfahrzeugs ermöglicht werden. Wird die Halteeinrichtung aus der Arbeitsstellung in die wenigstens eine Schutzstellung verstellt, so wird die erste Federeinrichtung und/oder die zweite Federeinrichtung mit einer der Federkraft entgegenwirkenden Verstellkraft beaufschlagt. Entfällt die Verstellkraft anschließend so wird die Halteeinrichtung unter Einwirkung der jeweiligen Federkraft in der ersten Federeinrichtung und/oder der zweiten Federeinrichtung von der wenigstens einen Schutzstellung in die Arbeitsstellung rückgestellt. Somit ermöglichen die Federeinrichtungen, dass die Halteeinrichtung bei der von außen auf die Halteeinrichtung beziehungsweise auf das Außenanbauteil wirkenden Verstellkraft die Halteeinrichtung nachgibt, sodass eine Beschädigung des Außenanbauteils zumindest im Wesentlichen vermieden werden kann. Wird die Halteeinrichtung nicht mit der Verstellkraft beaufschlagt, so wird mittels der Federkraft der ersten Federeinrichtung und/oder der zweiten Federeinrichtung die Halteinrichtung in die Arbeitsstellung rückgestellt beziehungsweise in dieser positioniert und gehalten. Die Halteeinrichtung ermöglicht somit einen besonders vorteilhaften Schutz des Außenanbauteils vor einer Beschädigung.

In diesem Zusammenhang hat es sich als vorteilhaft erwiesen, wenn in der Arbeitsstellung das Verbindungselement entlang seiner Längserstreckungsrichtung zumindest im Wesentlichen parallel, insbesondere genau parallel, zu einer Oberfläche des Grundteils ausgerichtet ist. Überdies kann es vorgesehen sein, dass die erste Schwenkvorrichtung und die zweite Schwenkvorrichtung unterschiedliche Schwenkrichtungen beim Rückverschwenken der Halteeinrichtung von der wenigstens einen Schutzstellung in die Arbeitsstellung aufweisen. Somit wird mittels des Verbindungselements das Halteelement in die Arbeitsstellung rückgestellt, indem das Verbindungselement mittels Federkraft der ersten Federeinrichtung parallel zum Grundteil ausgerichtet wird und hierbei beispielsweise an das Grundteil anliegend gegen das Grundteil abgestützt wird. Hierbei zieht das Verbindungselement über die zweite Federeinrichtung das Halteelement in die Arbeitsstellung. Hierdurch kann die Arbeitsstellung besonders positionsgenau vorgegeben werden.

In weiterer Ausgestaltung der Erfindung ist vorgesehen, dass als Außenanbauteil eine Kameraeinrichtung über das Verbindungselement an dem Grundteil zu halten ist. Mit anderen Worten ist das Außenanbauteil eine Kameraeinrichtung, welche an dem zweiten Ende des Halteelements angeordnet ist und über das Halteelement und über das Verbindungselement mit dem Grundteil verbunden ist. Somit ist die Kameraeinrichtung über die Halteeinrichtung um die beiden Schwenkachsen schwenkbar außenseitig am Kraftfahrzeug befestigbar. Mittels der Kameraeinrichtung können Bilddaten, welche die Umgebung des Kraftfahrzeugs charakterisieren, erfasst werden. Diese Bilddaten können an einer elektronischen Recheneinrichtung des Kraftfahrzeugs übermittelt werden, um die Bilddaten im Innenraum des Kraftfahrzeugs auszugeben und/oder das Kraftfahrzeug in Abhängigkeit von den mittels der Kameraeinrichtung erfassten Bilddaten zu steuern. Die Kameraeinrichtung kann somit als Seitenspiegelersatzsystem verwendet werden. Insbesondere hat die Kameraeinrichtung im Gegensatz zu einem klassischen Seitenspiegel den Vorteil, dass ein toter Winkel in der Umgebung des Kraftfahrzeugs, und somit ein Bereich, welcher für den Fahrer des Kraftfahrzeugs uneinsehbar ist, besonders gering gehalten werden kann. Mittels der Kameraeinrichtung kann die Umgebung des Kraftfahrzeugs besonders umfangreich erfasst werden, sodass der Fahrer des Kraftfahrzeugs beispielsweise besonders umfangreich über die Umgebung des Kraftfahrzeugs informiert werden kann, indem die mittels der Kameraeinrichtung erfassten Bilddaten im Innenraum des Kraftfahrzeugs ausgegeben werden. Alternativ oder zusätzlich können die Bilddaten für ein Fahrassistenzsystem bereitgestellt werden, mittels welchen das Kraftfahrzeug zumindest teilautomatisiert steuerbar ist. Weiterhin vorteilhaft ist, dass die an der Halteeinrichtung befestigte Kameraeinrichtung im Gegensatz zu einem Seitenspiegel einen besonders geringen Luftwiderstand bei einem Fahren des Kraftfahrzeugs aufweist und somit eine besonders vorteilhafte Aerodynamik des Kraftfahrzeugs im Vergleich zu Seitenspiegeln ermöglicht.

In weiterer vorteilhafter Ausgestaltung der Erfindung ist vorgesehen, dass die erste Federeinrichtung und die zweite Federeinrichtung jeweils eine Spiralfeder aufweisen, deren Federkräfte in entgegengesetzte Richtungen weisen. Das bedeutet, dass mittels der in entgegengesetzte Richtungen weisenden Federkräfte unterschiedliche Rückstellrichtungen in den beiden Schwenkvorrichtungen umgesetzt werden können. Die unterschiedlichen Rückstellrichtungen ermöglichen eine besonders komplexe Verschwenkbewegung der Halteinrichtung beim Verstellen der Halteeinrichtung zwischen der wenigstens einen Schutzstellung und der Arbeitsstellung. Die jeweiligen Spiralfedern der Schwenkvorrichtungen ermöglichen, dass mittels jeder der Schwenkvorrichtungen eine individuelle Federkraft ihrer Spiralfeder zum Rückstellen von der wenigstens einen Schutzstellung in die Arbeitsstellung bereitgestellt werden kann. Die unterschiedlichen Schwenkrichtungen der beiden Schwenkvorrichtungen ermöglichen, dass mittels der Halteeinrichtung Verstellkräfte aus unterschiedlichen Richtungen ausgeglichen werden können, indem die Halteeinrichtung in eine jeweilige Schutzstellung durch Belasten wenigstens einer der Federeinrichtungen verstellt wird. Eine jeweilige Bewegungskurve, entlang welcher das Außenanbauteil bei dessen Verstellung verläuft, kann beispielsweise mittels jeweiliger Federkräfte in den Spiralfedern der Federeinrichtungen eingestellt werden. Hierdurch ist das mittels der Halteeinrichtung an einer Außenseite des Kraftfahrzeugs befestigte Außenanbauteil besonders gut vor einer Beschädigung infolge einer Einwirkung einer Verstellkraft zu schützen.

In weiterer vorteilhafter Ausgestaltung der Erfindung ist vorgesehen, dass die erste Federeinrichtung und die zweite Federeinrichtung jeweils eine Druckfeder aufweisen, deren Federkräfte entlang der jeweiligen Schwenkachsen verlaufen. Die jeweilige Druckfeder beaufschlagt das Verbindungselement relativ zum Halteelement beziehungsweise relativ zum Grundteil mit einer senkrecht zu der Längserstreckungsrichtung des Verbindungselements wirkenden Federkraft. Hierdurch kann das Verbindungselement entlang der jeweiligen Schwenkachsen sowohl gegen das Halteelement, als auch gegen das Grundteil gedrückt werden. Beispielsweise können an jeweiligen Kontaktflächen des Verbindungselements mit dem Grundteil beziehungsweise mit dem Halteelement Rampen vorgesehen sein, über welche das Verbindungselement durch Beaufschlagung mit der jeweiligen Federkraft der Druckfeder gegen das Grundteil beziehungsweise das Halteelement zu drücken ist, wodurch das Verbindungselement über die Rampen relativ zum Grundteil beziehungsweise zum Halteelement um die jeweilige zugehörige Schwenkachse verschwenkt wird. Über die jeweiligen Rampen und/oder über jeweilige an den Kontaktflächen angeordnete Rastelemente kann das Verbindungselement relativ zum Grundteil beziehungsweise zum Halteelement in jeweiligen Positionen, beispielsweise der Arbeitsstellung, fixiert werden. Die Druckfedern stellen eine besonders einfache Methode dar, mittels welcher das Verbindungselement relativ zu dem Grundteil beziehungsweise dem Halteelement positionierbar ist.

In einer weiteren vorteilhaften Ausgestaltung der Erfindung ist vorgesehen, dass die erste Federeinrichtung und die zweite Federeinrichtung über eine Schenkelfeder miteinander verbunden sind, über deren Federkraft das Verbindungselement und das Halteelement gemeinsam in die Arbeitsstellung rückstellbar sind. Das bedeutet, dass die erste Federeinrichtung und die zweite Federeinrichtung gemeinsam und gleichzeitig mittels der Schenkelfeder mit einer Federkraft beaufschlagbar sind. Beispielsweise ist die Schenkelfeder sowohl an dem Grundteil als auch an dem Halteelement abgestützt, um die Halteeinrichtung von der wenigstens einen Schutzstellung in die Arbeitsstellung rückzustellen. Mittels der Schenkelfeder kann beispielsweise das Verbindungselement zum Rückstellen in die Arbeitsstellung an das Grundteil entlang seiner Längserstreckungsrichtung angeklappt beziehungsweise angelegt werden und das Halteelement zumindest im Wesentlichen senkrecht von dem Grundteil abstehend angeordnet werden. Mittels der Schenkelfeder kann die Arbeitsstellung reproduzierbar und positionsfest über eine jeweilige Ausgestaltung der Schenkelfeder vorgegeben werden.

Eine Kombination der oben beschriebenen Ausführungsformen der Federeinrichtungen ist ebenfalls möglich. So kann eine der Federeinrichtungen die Spiralfeder aufweisen und/oder eine der Federeinrichtungen die Druckfeder aufweisen. Zusätzlich können die Federeinrichtungen über die Schenkelfeder miteinander verbunden sein.

Es hat sich in einer Weiterbildung der Erfindung als vorteilhaft gezeigt, wenn zusätzlich zu dem Außenanbauteil wenigstens ein weiteres Außenanbauteil von dem Halteelement aufnehmbar ist. Mit anderen Worten sind mittels des Halteelements das Anbauteil sowie das weitere Anbauteil relativ zum Grundteil positionierbar. Hierbei können sowohl mittels des Außenanbauteils als auch mittels des weiteren Anbauteils Informationen über die Umgebung des Kraftfahrzeugs erfasst werden und für die elektronische Recheneinrichtung des Kraftfahrzeugs bereitgestellt werden. Mittels der Halteeinrichtung sind in dieser Ausführungsform der Erfindung somit besonders viele Außenanbauteile an der Außenseite des Kraftfahrzeugs befestigbar, wodurch die Halteeinrichtung besonders effizient genutzt werden kann.

Es hat sich in diesem Zusammenhang als vorteilhaft erwiesen, wenn das weitere Außenanbauteil eine Kameraeinrichtung oder eine Antenne oder eine Positionsleuchte oder eine Blinkleuchte oder ein Heizelement oder eine Reinigungsvorrichtung ist. Mit anderen Worten sind mittels der Halteeinrichtung das Außenanbauteil und zusätzlich die Kameraeinrichtung und/oder die Antenne und/oder die Positionsleuchte und/oder die Blinkleuchte und/oder das Heizelement und/oder die Reinigungsvorrichtung aufnehmbar, um diese relativ zur Außenseite des Kraftfahrzeugs zu positionieren. Handelt es sich bei dem weiteren Anbauteil um eine Kameraeinrichtung, so können mittels der Halteeinrichtung beispielsweise zwei Kameraeinrichtungen gehalten werden. Sind die beiden Kameraeinrichtungen in eine gleiche Richtung ausgerichtet, so können über einen Abstand der beiden Kameraeinrichtungen relativ zu einander Tiefeninformationen über eine

Umgebung des Kraftfahrzeugs gewonnen werden. Diese Tiefeninformationen der Umgebung des Kraftfahrzeugs können der elektronischen Recheneinrichtung zum Steuern des Kraftfahrzeugs zur Verfügung gestellt werden. Handelt es sich bei dem weiteren Außenanbauteil um die Antenne, insbesondere eine V2X-Antenne, so kann mittels der Halteeinrichtung eine Ausrichtung der Antenne oder eine Position der Antenne relativ zum Kraftfahrzeug besonders vorteilhaft eingestellt werden. Alternativ oder zusätzlich kann an der Halteeinrichtung als weiteres Außenanbauteil die Positionsleuchte und/oder die Blinkleuchte angeordnet sein, welche aufgrund der mittels der Halteeinrichtung beabstandeten Anordnung zur Außenoberfläche des Kraftfahrzeugs für weitere Verkehrsteilnehmer besonders gut sichtbar sind. Mittels des Heizelements eines weiteren Außenanbauteils kann das mittels der Halteeinrichtung an dem Grundteil gehaltene Außenanbauteil vor einer Vereisung geschützt werden und/oder mittels des Heizelements auf eine Betriebstemperatur erwärmt werden. Somit dient das Heizelement einem besonders vorteilhaften Betreiben des Außenanbauteils. Ist zusätzlich zu dem Außenanbauteil an der Halteeinrichtung als weiteres Außenanbauteil die Reinigungsvorrichtung angeordnet, so kann mittels der Reinigungsanordnung das Außenanbauteil und/oder das Kraftfahrzeug außenseitig von Verschmutzungen befreit werden. Handelt es sich bei dem Außenanbauteil beispielsweise um die Kameraeinrichtung, so kann mittels der Reinigungsvorrichtung sichergestellt werden, dass die Kameraeinrichtung frei von Verschmutzungen ist und somit eine Beeinträchtigung eines Erfassens der Umgebung des Kraftfahrzeugs mittels der Kameraeinrichtung zumindest im Wesentlichen vermieden werden kann. Somit ermöglicht das weitere Außenanbauteil beispielsweise vorteilhafterweise ein besonders vorteilhaftes Betreiben des Außenanbauteils.

Es hat sich des Weiteren als vorteilhaft erwiesen, wenn das Außenanbauteil und das weitere Außenanbauteil jeweils als Kameraeinrichtung ausgebildet sind, wobei ein erstes Sichtfeld einer ersten der Kameraeinrichtungen in Fahrzeuglängsrichtung nach hinten und ein zweites Sichtfeld der zweiten Kameraeinrichtung in Fahrzeughochrichtung nach unten ausgerichtet sind. Alternativ oder zusätzlich kann zumindest ein Sichtfeld der Kameraeinrichtungen entlang einer Fahrzeugquerrichtung nach außen und somit dem Kraftfahrzeug abgewandt ausgerichtet sein. Das Anordnen der Kameraeinrichtungen an der Halteeinrichtung derart, dass deren Sichtfelder in unterschiedliche Richtungen in die Umgebung des Kraftfahrzeugs ausgerichtet sind ermöglicht, dass mittels der Kameraeinrichtungen die Umgebung des Kraftfahrzeugs möglichst umfangreich erfassbar ist. Somit können mittels der Kameraeinrichtung besonders umfangreiche Bilddaten, welche die Umgebung des Kraftfahrzeugs charakterisieren, erfasst werden und zum Steuern des Kraftfahrzeugs für die elektronische Recheneinrichtung bereitgestellt werden. Hierdurch ist ein besonders sicheres Steuern des Kraftfahrzeugs aufgrund der umfangreichen Informationen über die Umgebung des Kraftfahrzeugs möglich.

Die Erfindung sieht vor, dass das Verbindungselement um eine sich parallel zu einer Längserstreckungsrichtung des Verbindungselements erstreckende, dritte Schwenkachse relativ zu dem Grundteil verschwenkbar an dem Grundteil gehalten ist. Mit anderen Worten ist das Verbindungselement um dessen Längserstreckungsachse relativ zum Grundteil verschwenkbar, um eine parallel zu der ersten Schwenkachse und der zweiten Schwenkachse auf die Halteeinrichtung einwirkende Verstellkraft ausgleichen zu können. Hierdurch kann das Außenanbauteil mittels der Halteeinrichtung besonders vorteilhaft vor in Richtung der ersten Schwenkachse und der zweiten Schwenkachse wirkenden Verstellkräften geschützt werden, indem das um die dritte Schwenkachse verschwenkbare Verbindungselement eine Ausweichbewegung ermöglicht. Hierbei kann beispielsweise eine dritte Schwenkvorrichtung mit einer dritten Federeinrichtung vorgesehen sein, mittels welcher das Verbindungselement aus der wenigstens einen Schutzstellung, in welcher das Verbindungselement der entlang der ersten Schwenkachse und der zweiten Schwenkachse wirkenden Verstellkraft ausgewichen ist, in die Arbeitsstellung zu ermöglichen.

In weiterer vorteilhafter Ausgestaltung der Erfindung ist vorgesehen, dass das Halteelement einen Kanal aufweist, in welchem eine Datenleitung und/oder eine Energieleitung für eine Datenverbindung und/oder eine Energieverbindung des Außenanbauteils aufnehmbar sind. Mit anderen Worten weist das Halteelement als Kanal eine sich entlang der Längserstreckungsrichtung des Halteelements erstreckende Ausnehmung auf, in welcher die Datenleitung und/oder die Energieleitung anordenbar sind. Alternativ oder zusätzlich kann das Halteelement eine Aufnahmeeinrichtung für die Datenleitung und/oder die Energieleitung aufweisen. Mittels der Datenleitung und/oder der Energieleitung ist das Außenanbauteil zur Energieversorgung und/oder für die Datenkommunikation über das Grundteil mit dem Kraftfahrzeug verbindbar. Die Energieleitung ermöglicht, dass elektrische Energie von dem Kraftfahrzeug zum Betreiben des Außenanbauteils für das Außenanbauteil bereitgestellt wird. Die Datenleitung ermöglicht, dass mittels des Außenanbauteils die erfasste Information über die Umgebung für das Kraftfahrzeug bereitstellbar ist. Der Kanal des Halteelements ermöglicht, dass die Datenleitung und/oder die Energieleitung vor Beschädigungen geschützt entlang des Halteelements geführt werden können. Es ist somit eine besonders sichere Energieverbindung und/oder Informationsverbindung entlang der Halteeinrichtung möglich.

Die Erfindung umfasst auch die Kombinationen der Merkmale der beschriebenen Ausführungsformen.

Die Erfindung betrifft des Weiteren ein System mit einer Halteeinrichtung, wie sie bereits im Zusammenhang mit der erfindungsgemäßen Halteeinrichtung beschrieben worden ist, sowie mit einem Außenanbauteil. Bei dem Außenanbauteil handelt es sich insbesondere um die Kameraeinrichtung, welche als Spiegelersatz dienen kann. Dieses System ermöglicht ein besonders vorteilhaftes Erfassen einer Umgebung eines das System aufweisenden Kraftfahrzeugs, wobei das System gleichzeitig besonders vorteilhaft vor einer Beschädigung geschützt ist.

Ein weiterer Aspekt der Erfindung betrifft ein Kraftfahrzeug, insbesondere einen Kraftwagen, insbesondere einen Personenkraftwagen oder einen Lastkraftwagen oder einen Omnibus, mit einer Halteeinrichtung, wie sie bereits im Zusammenhang mit der erfindungsgemäßen Halteeinrichtung beschrieben worden ist. Mittels der Halteeinrichtung ist ein Außenanbauteil außenseitig des Kraftfahrzeugs befestigbar. Bei dem Außenanbauteil handelt es sich insbesondere um eine Kameraeinrichtung zum Erfassen einer Umgebung des Kraftfahrzeugs.

Vorteile und vorteilhafte Weiterbildungen der erfindungsgemäßen Halteeinrichtung sind als Vorteile und vorteilhafte Weiterbildungen des erfindungsgemäßen Systems und des erfindungsgemäßen Kraftfahrzeugs anzusehen und umgekehrt. Aus diesem Grund sind die Vorteile und vorteilhaften Weiterbildungen des erfindungsgemäßen Systems und des erfindungsgemäßen Kraftfahrzeugs hier nicht noch einmal beschrieben.

Im Folgenden ist ein Ausführungsbeispiel der Erfindung beschrieben. Hierzu zeigt:

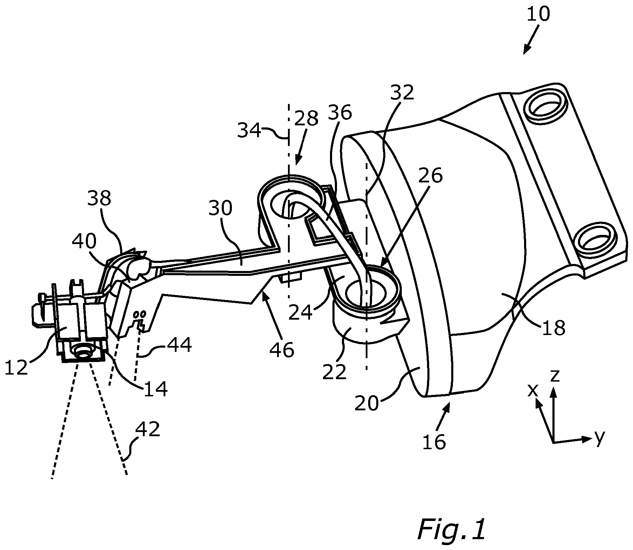

- Fig. 1: eine schematische Perspektivansicht einer Halteeinrichtung für ein Außenanbauteil eines Kraftfahrzeugs mit einem außenseitig des Kraftfahrzeugs befestigbaren Grundteil, mit einem einenends an dem Grundteil verschwenkbar angeordneten Verbindungselement sowie mit einem Halteelement, welches einenends an dem Verbindungselement verschwenkbar angeordnet ist und anderenends das Außenanbauteil aufgenommen hat;

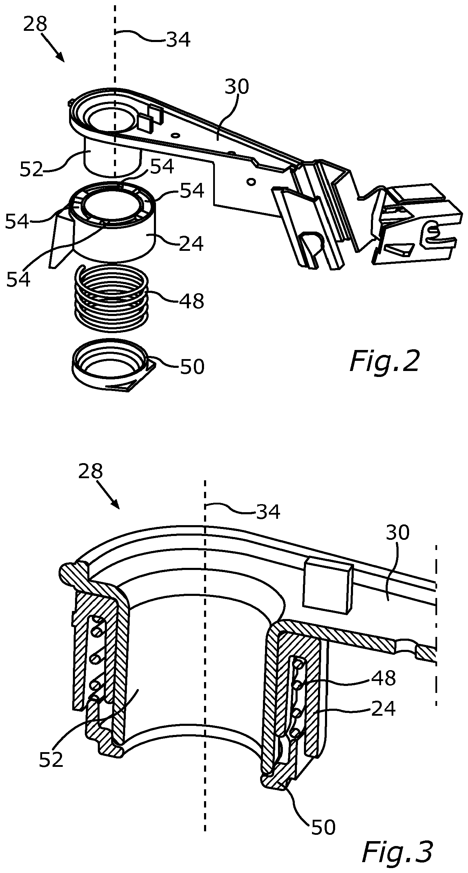

- Fig. 2: eine schematische Explosionsansicht einer zweiten Schwenkvorrichtung, über welche das Halteelement an dem Verbindungselement gehalten ist, mit einer Federeinrichtung, mittels welcher das Halteelement in unterschiedlichen Positionen relativ zum Verbindungselement arretierbar ist; und
- Fig. 3: eine schematische Schnittansicht der zweiten Schwenkvorrichtung, wobei zum Arretieren des Halteelements relativ zum Verbindungselement mittels eines Spannelements über eine Federkraft einer Druckfeder Rastelemente des Verbindungselements mit korrespondierenden Rastelementen des Halteelements in Eingriff gebracht werden.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Fig. 1 zeigt eine Halteeinrichtung 10 für ein Außenanbauteil 12 eines Kraftfahrzeugs. Vorliegend handelt es sich bei dem Außenanbauteil 12 um eine Kameraeinrichtung mit einer ersten Kamera 14, mittels welcher eine Umgebung des Kraftfahrzeugs charakterisierende Bilddaten erfassbar sind. Die Kameraeinrichtung kann beispielsweise als Seitenspiegelersatz eingesetzt werden.

Mittels der Halteeinrichtung 10 ist das Außenanbauteil 12 relativ zum Kraftfahrzeug in einer Arbeitsstellung, welche in Fig. 1 dargestellt ist, positionierbar. Des Weiteren ist mittels der Halteeinrichtung 10 das Außenanbauteil 12 relativ zum Kraftfahrzeug in wenigstens eine Schutzstellung verschwenkbar, wobei über das Verschwenken des Außenanbauteils 12 in die Schutzstellung eine äußere Krafteinwirkung auf das Außenanbauteil 12 nachgegeben werden kann, um das Außenanbauteil 12 vor Beschädigungen zu schützen. Insbesondere ist die Halteeinrichtung 10 in einem Seitenspiegelbereich des Kraftfahrzeugs angeordnet, um mittels der Kameraeinrichtung zumindest einen normalerweise von einem Außenspiegel erfassten Sichtbereich zu erfassen.

Die Halteeinrichtung 10 umfasst, wie in Fig. 1 erkannt werden kann, ein Grundteil 16, welches dazu eingerichtet ist, außenseitig an dem Kraftfahrzeug befestigt zu werden. Vorliegend umfasst das Grundteil 16 einen Fahrzeugadapter 18, welcher unmittelbar mit dem Kraftfahrzeug verbindbar ist, sowie einen mit dem Fahrzeugadapter 18 verbundenen Haltefuß 20. Der an ein jeweiliges Kraftfahrzeug anpassbare Fahrzeugadapter 18 ermöglicht, dass die Halteeinrichtung 10 bei besonders geringen Produktionskosten mit diversen Kraftfahrzeugtypen verbindbar ist. Der Haltefuß 20 weist eine Aufnahme 22 auf, an welcher ein Verbindungselement 24 über eine erste Schwenkvorrichtung 26 verschwenkbar zu halten ist. Das Grundteil 16 ist insbesondere entlang einer Fahrzeugquerrichtung y des Kraftfahrzeugs außenseitig des Kraftfahrzeugs anordenbar, wodurch mittels der ersten Kamera 14 ein Seitenbereich des Kraftfahrzeugs erfassbar ist.

Das Verbindungselement 24 ist vorliegend länglich ausgebildet, wobei sich das Verbindungselement 24 in der Arbeitsstellung mit seiner Längserstreckungsrichtung in Fahrzeuglängsrichtung x erstreckt und das Verbindungselement 24 mit seiner Längserstreckungsrichtung in der wenigstens einen Schutzstellung der Halteeinrichtung 10 in einem Winkel und somit schräg zur Fahrzeuglängsrichtung x angeordnet ist. Einenends ist das Verbindungselement 24 über die erste Schwenkvorrichtung 26 mit dem Haltefuß 20 des Grundteils 16 verschwenkbar verbunden. Anderenends ist das Verbindungselement 24 über eine zweite Schwenkvorrichtung 28 mit einem Halteelement 30 relativ zum Halteelement 30 verschwenkbar verbunden. Die erste Schwenkvorrichtung 26 weist eine erste Schwenkachse 32 auf, um welche das Verbindungselement 24 relativ zum Grundteil 16 verschwenkbar ist. Die zweite Schwenkvorrichtung 28 weist eine zweite Schwenkachse 34 auf, um welche das Halteelement 30 und das Verbindungselement 24 relativ zueinander verschwenkbar sind. Zum Verschwenken der Halteeinrichtung 10 zwischen der wenigstens einen Schutzstellung und der Arbeitsstellung werden das Halteelement 30, das Verbindungselement 24 sowie das Grundteil 16 relativ zueinander um die Schwenkachsen 32, 34 verschwenkt. Die zweite Schwenkachse 34 ist beabstandet zur ersten Schwenkachse 32 angeordnet, wobei die erste Schwenkachse 32 und die zweite Schwenkachse 34 parallel zueinander verlaufen. Sowohl die erste Schwenkvorrichtung 26 als auch die zweite Schwenkvorrichtung 28 umfassen jeweils eine Federeinrichtung, wobei die Federeinrichtungen über eine gemeinsame Schenkelfeder miteinander verbunden sein können. Unter der jeweiligen Federeinrichtung ist in der die Schenkelfeder aufweisenden Ausführungsform zumindest ein Bereich der Schenkelfeder zusammen mit einem jeweiligen Anschlagbereich zu verstehen, an welchem die Schenkelfeder an das Verbindungselement 24 und das Grundteil 16 beziehungsweise an das Verbindungselement 24 und das Halteelement 30 abgestützt ist. Mittels der jeweiligen Federeinrichtungen ist über die Federkraft der Schenkelfeder die Halteeinrichtung 10 von der wenigstens einen Schutzstellung in die Arbeitsstellung rückstellbar. Mittels der der ersten Schwenkvorrichtung 26 zugeordneten ersten Federeinrichtung ist das Verbindungselement 24 von der wenigstens einen Schutzstellung in die Arbeitsstellung rückstellbar während mittels der zweiten Federeinrichtung, welche der zweiten Schwenkvorrichtung 28 zugeordnet ist, das Halteelement 30 von der wenigstens einen Schutzstellung in die Arbeitsstellung rückstellbar. Somit sind über die Schenkelfeder das Verbindungselement 24 und das Halteelement 30 gemeinsam und gleichzeitig aus der wenigstens einen Schutzstellung in die Arbeitsstellung rückstellbar. Über die Federkraft der Schenkelfeder ist die Halteeinrichtung 10 in der Arbeitsstellung positionierbar und kann mittels der Federkraft in dieser Arbeitsstellung gehalten werden. Mittels der Federkraft der Schenkelfeder wird vorliegend bewirkt, dass in der Arbeitsstellung das Verbindungselement 24 entlang seiner Längserstreckungsrichtung parallel zu einer Oberfläche des Grundteils 16 und somit parallel zur Fahrzeuglängsrichtung x des Kraftfahrzeugs ausgerichtet ist. Das Halteelement 30 ist in der Arbeitsstellung zumindest im Wesentlichen entlang seiner Längserstreckungsrichtung senkrecht von dem Grundteil 16 abstehend und somit parallel zur Fahrzeugquerrichtung y ausgerichtet. Insbesondere kann das Halteelement 30 einen Anschlag aufweisen, mittels welchem das Halteelement 30 in der Arbeitsstellung gegen das Verbindungselement 24 und/oder gegen das Grundteil 16 anschlägt. Mittels des Anschlags kann eine Positionierung des Halteelements 30 in der Arbeitsstellung besonders positionsgenau erfolgen.

Alternativ oder zusätzlich zur Schenkelfeder können die erste Federeinrichtung und die zweite Federeinrichtung jeweils eine Spiralfeder aufweisen, deren Federkräfte in entgegengesetzte Drehrichtungen wirken, sodass die erste Schwenkvorrichtung 26 und die zweite Schwenkvorrichtung 28 mit entgegengesetzten Drehmomenten um die erste Schwenkachse 32 und die zweite Schwenkachse 34 gemäß der Federeinrichtungen beaufschlagt werden. Die in unterschiedliche Drehrichtungen um die jeweiligen Schwenkachsen 32, 34 wirkenden Federkräfte der Spiralfeder beziehungsweise der Schenkelfeder ermöglichen, dass mittels der Halteeinrichtung 10 Verstellkräften, welche entlang der Fahrzeuglängsrichtung x auf das Außenanbauteil 12 einwirken, ausgewichen werden kann.

In den Fig. 2 und 3 sind weitere alternative Ausgestaltungen der Federeinrichtungen dargestellt. Beispielhaft ist hierbei die Federeinrichtung der zweiten Schwenkvorrichtung 28 dargestellt, über welche das Halteelement 30 mit dem Verbindungselement 24 verbunden ist. Die Federeinrichtung der ersten Schwenkvorrichtung 26 kann analog zu der Federeinrichtung der zweiten Schwenkvorrichtung 28 ausgebildet sein. Wie in Fig. 2 in einer schematischen Explosionsdarstellung erkannt werden kann, umfasst die zweite Schwenkvorrichtung 28 eine Druckfeder 48 sowie ein Spannelement 50. Überdies weist das Halteelement 30 einen in eine Öffnung des Verbindungselements hineinragenden, kreisrunden Kragen 52 auf, dessen Mittelachse sich entlang der zweiten Schwenkachse 34 erstreckt. Eine Mittelachse der Druckfeder 48 verläuft ebenfalls entlang der zweiten Schwenkachse 34, wobei eine Kraftrichtung der Druckfeder 48 parallel zur zweiten Schwenkachse 34 verläuft. Das Spannelement 50 dient einem Abstützen der Druckfeder 48, wobei die Druckfeder 48 ihre Federkraft an das Verbindungselement 24 überträgt, um das Verbindungselement 24 gegen das Halteelement 30 zu drücken. Hierbei sind an jeweiligen Kontaktflächen des Verbindungselements 24 und des Halteelements 30 korrespondierende Rastelemente vorgesehen, mittels welcher das Verbindungselement 24 relativ zum Halteelement 30 in jeweiligen durch die Rastelemente vorgegebenen Positionen fixierbar ist.

In Fig. 3 ist die zweite Schwenkvorrichtung 28 geschnitten dargestellt. Hierbei kann erkannt werden, dass das Spannelement 50 gegen den Kragen 52 des Halteelements 30 abgestützt ist. Über die Druckfeder 48 wird das Verbindungselement 24 im Bereich der Kontaktflächen gegen das Halteelement 30 gedrückt, wobei Rastelemente 54 des Verbindungselements 24 mit korrespondierenden Rastelementen des Halteelements 30 in Eingriff gebracht werden können. Zur Positionierung des Verbindungselements 24 relativ zum Halteelement 30 können die korrespondierenden Rastelemente jeweilige miteinander in Eingriff bringbare schräge Flächenbereiche aufweisen, mittels welcher durch Beaufschlagung mit Federkraft von der Druckfeder 48 das Halteelement 30 relativ zum Verbindungselement 24 bewegbar und in einer definierten Position anordenbar ist. Unter den schrägen Flächenbereichen ist in diesem Zusammenhang zu verstehen, dass die Flächenbereiche einen Winkel mit einer die zweite Schwenkachse 34 senkrecht schneidenden Ebene einschließen.

In einer in Fig. 1 nicht dargestellten Ausführungsform kann das Verbindungselement 24 um eine sich parallel zu einer Längserstreckungsrichtung des Verbindungselements 24 erstreckende, dritte Schwenkachse relativ zu dem Grundteil 16 verschwenkbar an dem Grundteil 16 gehalten werden. Dies ermöglicht, dass mittels der Halteeinrichtung 10 entlang der Fahrzeughochrichtung z auf das Außenanbauteil 12 wirkenden Verstellkräften ausgewichen werden kann. Folglich kann mittels der Halteeinrichtung 10 das Außenanbauteil 12 besonders vorteilhaft vor einer Beschädigung infolge einer Verstellkrafteinwirkung geschützt werden. Die Halteeinrichtung 10 ist folglich insbesondere in alle Richtungen und somit dreidimensional abknickbar.

Wie in Fig. 1 erkannt werden kann, ist das Halteelement 30 dazu eingerichtet, zusätzlich zu dem Außenanbauteil 12 ein weiteres Außenanbauteil 38 aufzunehmen. Bei dem weiteren Außenanbauteil 38 handelt es sich vorliegend um eine eine zweite Kamera 40 aufweisende zweite Kameraeinrichtung. Ein erstes Sichtfeld 42 der ersten Kamera 14 verläuft vorliegend entlang der Fahrzeuglängsrichtung x, insbesondere nach hinten. Ein zweites Sichtfeld 44 der zweiten Kamera 40 verläuft vorliegend entlang einer Fahrzeughochrichtung z des Kraftfahrzeugs nach unten. Die in unterschiedliche Richtungen ausgerichtete Sichtfelder 42, 44 der Kameras 14, 40 ermöglichen ein besonders umfangreiches Erfassen der Umgebung des Kraftfahrzeugs. Sind die erste Kamera 14 und die zweite Kamera 40 an dem Halteelement 30 angeordnet, dann kann die Umgebung des Kraftfahrzeugs mit einer besonders hohen Auflösung erfasst werden.

Alternativ oder zusätzlich zu der zweiten Kamera 40 kann an dem Halteelement 30 eine Antenne und/oder eine Positionsleuchte und/oder eine Blinkleuchte und/oder ein Heizelement und/oder eine Reinigungsvorrichtung für ein besonders vorteilhaftes Betreiben des Kraftfahrzeugs und/oder der ersten Kamera 14 und/oder der zweiten Kamera 40 angeordnet sein.

Um eine Energieversorgung der ersten Kamera 14 und/oder der zweiten Kamera 40 mit elektrischer Energie vom Kraftfahrzeug sicherzustellen, ist eine Energieleitung vorgesehen, welche entlang des Halteelements 30 von der jeweiligen Kamera 14, 40 bis zum Grundteil 16 für einen Anschluss der Kameras 14, 40 an das Kraftfahrzeug geführt wird. Zum Führen der Energieleitung weist das Halteelement 30 einen Kanal 46 auf, in welchem die Energieleitung aufgenommen werden kann. In dem Kanal 46 kann alternativ oder zusätzlich eine Datenleitung aufgenommen werden, mittels welcher eine Datenverbindung zwischen der ersten Kamera 14 und/oder der zweiten Kamera 40 und dem Kraftfahrzeug bereitgestellt werden kann. Mittels des Kanals 46 können die Energieleitung und die Datenleitung besonders vorteilhaft vor Beschädigungen geschützt werden, da der Kanal 46 die Energieleitung und/oder die Datenleitung vorliegend zumindest zu drei Seiten hin umgibt und somit schützt. Der Kanal 46 des Halteelements 30 ermöglicht, dass das Kabel der Datenleitung und/oder der Energieleitung entlang der Fahrzeughochrichtung z von unten am Halteelement 30 befestigbar sind, sodass die Datenleitung und/oder die Energieleitung besonders einfach in der Linie montiert werden können und die Kabel nicht lose sind. Die Datenleitung und die Energieleitung sind vorliegend in einer gemeinsamen Kabelführung 36 aufgenommen, mittels welcher die Datenleitung und die Energieleitung von dem Grundteil 16, insbesondere dem Kraftfahrzeug, zu dem Außenanbauteil 12 führbar sind.

Das Verbindungselement 24 kann alternativ als Ausleger bezeichnet werden. Das Halteelement 30 kann als Kameraarm bezeichnet werden.

Die Halteeinrichtung 10 kann in der Arbeitsstellung angeordnet werden oder in einer Einklappstellung entlang der Fahrzeuglängsrichtung x nach vorne oder nach hinten eingeklappt werden, wobei das Halteelement 30 entlang seiner Längserstreckungsrichtung in Fahrzeuglängsrichtung x ausgerichtet ist. Die Halteeinrichtung 10 kann eine Rastfunktion aufweisen, wobei mittels der Rastfunktion die Halteeinrichtung 10 in der Arbeitsstellung zu halten ist. Die dritte Schwenkachse ermöglicht ein Abknicken der Halteeinrichtung 10 in Fahrzeughochrichtung z nach oben und nach unten.

Zumindest das Verbindungselement 24 sowie das Halteelement 30 können von einem in den Figuren nicht dargestellten Gehäuse umgeben sein, um das Verbindungselement 24 und das Halteelement 30 besonders vorteilhaft vor Beschädigungen zu schützen. Das Gehäuse kann eine entlang der Fahrzeughochrichtung z unten angeordnete Montageklappe aufweisen, welche einen besonders einfachen Zugang beziehungsweise Zugriff auf das Außenanbauteil 12 sowie das weitere Außenanbauteil 38 und insbesondere die erste Kamera 14 sowie die zweite Kamera 40 ermöglicht.

Die Halteeinrichtung 10 kann alternativ an Kraftfahrzeugen ohne Kamera-Monitor-System eingesetzt werden. Hierbei können mittels der Halteeinrichtung 10 Sensoren für hochautonomes Fahren als Außenanbauteile an der Außenseite des Kraftfahrzeugs gehalten werden.

Insgesamt zeigt das Beispiel, wie durch die Erfindung eine Vorrichtung zur Befestigung von optischen Sensoren bereitgestellt werden kann.

## Patentansprüche

1. Halteeinrichtung (10) für ein Außenanbauteil (12) eines Kraftfahrzeugs, mit einem Grundteil (16) zur außenseitigen Anordnung am Kraftfahrzeug, an welchem ein Verbindungselement (24) mittels einer ersten Schwenkvorrichtung (26) gelagert ist, mittels welcher das Verbindungselement (24) relativ zum Grundteil (16) um eine erste Schwenkachse (32) zwischen einer Arbeitsstellung und wenigstens einer Schutzstellung verschwenkbar ist und welche eine erste Federeinrichtung aufweist, mittels deren Federkraft das Verbindungselement (24) von der wenigstens einen Schutzstellung in die Arbeitsstellung rückstellbar ist,
**dadurch gekennzeichnet, dass** zum Aufnehmen des Außenanbauteils (12) ein Halteelement (30) vorgesehen ist, welches um eine von der ersten Schwenkachse (32) beabstandete und zu dieser parallele zweite Schwenkachse (34) zwischen der Arbeitsstellung und der wenigstens einen Schutzstellung schwenkbar an dem Verbindungselement (24) über eine zweite Schwenkvorrichtung (28) mit einer zweiten Federeinrichtung gelagert ist, mittels welcher das Halteelement (30) von der wenigstens einen Schutzstellung in die Arbeitsstellung rückstellbar ist, und dass
das Verbindungselement (24) um eine sich parallel zu einer Längserstreckungsrichtung des Verbindungselements (24) erstreckende, dritte Schwenkachse relativ zu dem Grundteil (16) verschwenkbar an dem Grundteil (16) gehalten ist.

2. Halteeinrichtung (10) nach Anspruch 1,
**dadurch gekennzeichnet, dass** in der Arbeitsstellung das Verbindungselement (24) entlang seiner Längserstreckungsrichtung zumindest im Wesentlichen parallel zu einer Oberfläche des Grundteils (16) ausgerichtet ist.

3. Halteeinrichtung (10) nach Anspruch 1 oder 2,
**dadurch gekennzeichnet, dass** als Außenanbauteil (12) eine Kameraeinrichtung über das Verbindungselement (24) an dem Grundteil (26) zu halten ist.

4. Halteeinrichtung (10) nach einem der vorhergehenden Ansprüche,
**dadurch gekennzeichnet, dass** die erste Federeinrichtung und die zweite Federeinrichtung jeweils eine Spiralfeder aufweisen, deren Federkräfte in entgegengesetzte Richtungen weisen.

5. Halteeinrichtung (10) nach einem der vorhergehenden Ansprüche,
**dadurch gekennzeichnet, dass** die erste Federeinrichtung und die zweite Federeinrichtung jeweils eine Druckfeder aufweisen, deren Federkräfte entlang der jeweiligen Schwenkachsen verlaufen.

6. Halteeinrichtung (10) nach einem der vorhergehenden Ansprüche,
**dadurch gekennzeichnet, dass** die erste Federeinrichtung und die zweite Federeinrichtung über eine Schenkelfeder miteinander verbunden sind, über deren Federkraft das Verbindungselement (24) und das Halteelement (30) gemeinsam in die Arbeitsstellung rückstellbar sind.

7. Halteeinrichtung (10) nach einem der vorhergehenden Ansprüche,
**dadurch gekennzeichnet, dass** zusätzlich zu dem Außenanbauteil (12) wenigstens ein weiteres Außenanbauteil (38) von dem Halteelement (30) aufnehmbar ist.

8. Halteeinrichtung (10) nach Anspruch 7,
**dadurch gekennzeichnet, dass** das weitere Außenanbauteil (38) eine Kameraeinrichtung oder eine Antenne oder eine Positionsleuchte oder eine Blinkleuchte oder ein Heizelement oder eine Reinigungsvorrichtung ist.

9. Halteeinrichtung (10) nach Anspruch 7 oder 8,
**dadurch gekennzeichnet, dass** das Außenanbauteil (12) und das weitere Außenanbauteil (38) jeweils als Kameraeinrichtungen ausgebildet sind, wobei ein erstes Sichtfeld (42) einer ersten der Kameraeinrichtungen in Fahrzeuglängsrichtung (x) nach hinten und ein zweites Sichtfeld (44) der zweiten der Kameraeinrichtungen in Fahrzeughochrichtung (z) nach unten ausgerichtet sind.

10. Halteeinrichtung (10) nach einem der vorhergehenden Ansprüche,
**dadurch gekennzeichnet, dass** das Halteelement (30) einen Kanal (46) aufweist, in welchem eine Datenleitung und/oder eine Energieleitung für eine Datenverbindung und/oder eine Energieverbindung des Außenanbauteils (12) aufnehmbar sind.

11. System mit einer Halteeinrichtung (10) nach einem der vorhergehenden Ansprüche und mit einem Außenanbauteil (12).

12. Kraftfahrzeug mit einer Halteeinrichtung (10) nach einem der Ansprüche 1 bis 10.

## Claims

1. Retaining device (10) for an exterior add-on part (12) of a motor vehicle, comprising a base part (16) for exterior mounting on the motor vehicle, on which a connecting element (24) is mounted by means of a first pivoting device (26), via which the connecting element (24) can be pivoted relative to the base part (16) about a first pivot axis (32) between a working position and at least one protection position, and which has a first spring device, via the spring force of which the connecting element (24) can be returned from the at least one protection position into the working position,
**characterized in that**
for receiving the exterior add-on part (12), a retaining element (30) is provided which is mounted on the connecting element (24) by means of a second pivoting device (28) having a second spring device, so as to be pivotable about a second pivot axis (34), which is spaced apart from the first pivot axis (32) and parallel thereto, between the working position and the at least one protection position, wherein the retaining element (30) can be returned from the at least one protection position into the working position by means of the second spring device, and **in that** the connecting element (24) is held on the base part (16) so as to be pivotable relative to the base part (16) about a third pivot axis extending parallel to a longitudinal extent direction of the connecting element (24)

2. Retaining device (10) according to Claim 1,
**characterized in that**
in the working position, the connecting element (24) is oriented with its longitudinal extent direction at least substantially parallel to a surface of the base part (16).

3. Retaining device (10) according to Claim 1 or 2,
**characterized in that**
as an exterior add-on part (12), a camera device is to be held on the base part (26) via the connecting element (24).

4. The retaining device (10) according to one of the preceding claims, **characterized in that**
the first spring device and the second spring device each comprise a coil spring, the spring forces of which point in opposite directions.

5. Retaining device (10) according to one of the preceding claims, **characterized in that**
the first spring device and the second spring device each comprise a compression spring, the spring forces of which run along the respective pivot axes.

6. Retaining device (10) according to one of the preceding claims, **characterized in that**
the first spring device and the second spring device are connected together via a leg spring, via the spring force of which the connecting element (24) and the retaining element (30) can jointly be returned to the working position.

7. Retaining device (10) according to one of the preceding claims, **characterized in that**
in addition to the exterior add-on part (12), at least one further exterior add-on part (38) can be received by the retaining element (30).

8. Retaining device (10) according to Claim 7,
**characterized in that**
the further exterior add-on part (38) is a camera device or an antenna or a positioning light or a direction indicator light or a heating element or a cleaning device.

9. Retaining device (10) according to Claim 7 or 8,
**characterized in that**
the exterior add-on part (12) and the further add-on part (38) are each configured as camera devices, wherein a first field of vision (42) of a first of the camera devices is oriented towards the rear in the vehicle longitudinal direction (x), and a second field of vision (44) of the second of the camera devices is oriented downward in the vehicle height direction (z).

10. Retaining device (10) according to any of the preceding claims, **characterized in that**
the retaining element (30) has a channel (46) which can receive a data line and/or an energy line for a data connection and/or an energy connection of the exterior add-on part (12).

11. System having a retaining device (10) according to one of the preceding claims and having an exterior add-on part (12).

12. Motor vehicle having a retaining device (10) according to one of Claims 1 to 10.

## Revendications

1. Dispositif de maintien (10) pour un élément rapporté extérieur (12) d'un véhicule automobile, comprenant une partie de base (16) servant à l'agencement externe sur le véhicule automobile et sur lequel est monté un élément de liaison (24) au moyen d'un premier dispositif pivotant (26) au moyen duquel l'élément de liaison (24) est pivotant par rapport à la partie de base (16) autour d'un premier axe de pivotement (32) entre une position de service et au moins une position de protection et qui présente un premier dispositif à ressort au moyen de la force de ressort duquel l'élément de liaison (24) peut être rappelé de ladite au moins une position de protection à la position de service,
**caractérisé en ce que** pour recevoir l'élément rapporté extérieur (12), un élément de maintien (30) est prévu qui est monté pivotant autour d'un deuxième axe de pivotement (34) espacé du premier axe de pivotement (32) et parallèle à celui-ci entre la position de service et ladite au moins une position de protection sur l'élément de liaison (24) par l'intermédiaire d'un deuxième dispositif pivotant (28) pourvu d'un deuxième dispositif à ressort au moyen duquel l'élément de maintien (30) peut être rappelé de ladite au moins une position de protection à la position de service, et **en ce que**
l'élément de liaison (24) est maintenu sur la partie de base (16) pivotant par rapport à la partie de base (16) autour d'un troisième axe de pivotement s'étendant en parallèle à une direction d'extension longitudinale de l'élément de liaison (24).

2. Dispositif de maintien (10) selon la revendication 1, **caractérisé en ce que** dans la position de service, l'élément de liaison (24) est orienté le long de sa direction d'extension longitudinale au moins substantiellement en parallèle à une surface de la partie de base (16).

3. Dispositif de maintien (10) selon la revendication 1 ou 2, **caractérisé en ce qu'**un dispositif de caméra peut être maintenu comme élément rapporté extérieur (12) par l'intermédiaire de l'élément de liaison (24) sur la partie de base (26).

4. Dispositif de maintien (10) selon l'une quelconque des revendications précédentes, **caractérisé en ce que** le premier dispositif à ressort et le deuxième dispositif à ressort présentent respectivement un ressort en spirale dont les forces de ressort sont orientées dans des directions opposées.

5. Dispositif de maintien (10) selon l'une quelconque des revendications précédentes, **caractérisé en ce que** le premier dispositif à ressort et le deuxième dispositif à ressort présentent respectivement un ressort de compression dont les forces de ressort s'étendent le long des axes de pivotement respectifs.

6. Dispositif de maintien (10) selon l'une quelconque des revendications précédentes, **caractérisé en ce que** le premier dispositif à ressort et le deuxième dispositif à ressort sont reliés ensemble par l'intermédiaire d'un ressort à branches par la force de ressort duquel l'élément de liaison (24) et l'élément de maintien (30) peuvent être rappelés ensemble dans la position de service.

7. Dispositif de maintien (10) selon l'une quelconque des revendications précédentes, **caractérisé en ce qu'**en plus de l'élément rapporté extérieur (12), au moins un autre élément rapporté extérieur (38) peut être reçu par l'élément de maintien (30).

8. Dispositif de maintien (10) selon la revendication 7, **caractérisé en ce que** l'autre élément rapporté extérieur (38) est un dispositif de caméra ou une antenne ou un feu de position ou un clignotant ou un élément chauffant ou un dispositif de nettoyage.

9. Dispositif de maintien (10) selon la revendication 7 ou 8, **caractérisé en ce que** l'élément rapporté extérieur (12) et l'autre élément rapporté extérieur (38) sont réalisés respectivement sous la forme de dispositifs de caméra, un premier champ visuel (42) d'un premier des dispositifs de caméra étant orienté vers l'arrière dans la direction longitudinale de véhicule (x), et un deuxième champ visuel (44) du deuxième des dispositifs de caméra étant orienté vers le bas dans la direction verticale de véhicule (z).

10. Dispositif de maintien (10) selon l'une quelconque des revendications précédentes, **caractérisé en ce que** l'élément de maintien (30) présente un canal (46) qui peut recevoir une ligne de données et/ou une ligne électrique pour une liaison de données et/ou une liaison électrique de l'élément rapporté extérieur (12).

11. Système comprenant un dispositif de maintien (10) selon l'une quelconque des revendications précédentes et un élément rapporté extérieur (12).

12. Véhicule automobile comprenant un dispositif de maintien (10) selon l'une quelconque des revendications 1 à 10.
